# EUROPÄISCHE PATENTANMELDUNG

(11) **EP 1 637 968 A2**
(43) Veröffentlichungstag der Anmeldung: **22.03.2006**
(21) Anmeldenummer: 05018313.6
(22) Anmeldetag: 23.08.2005
(51) Int. Cl.: G06F 1/16

(54) **Tastatur**

(30) Priorität: 21.09.2004 DE 102004045697
(71) Anmelder: Fujitsu Siemens Computers GmbH, 80807 München (DE)
(72) Erfinder: Geiger, Jürgen, 86836 Lagerlechfeld (DE); Gut, Bernhard, 86551 Aichach (DE)
(74) Vertreter: Epping - Hermann - Fischer

(57) **Zusammenfassung**

Die Erfindung betrifft eine Tastatur mit einem Tastaturoberteil (2), einem Tastaturunterteil und einem Tastenträger (1), wobei der Tastenträger (1) formschlüssig und klemmend am Tastaturoberteil (2) festlegbar ist.

## Beschreibung

Die Erfindung betrifft eine Tastatur mit einem Tastaturoberteil, einem Tastaturunterteil und einem Tastenträger.

Eine derartige Tastatur entspricht dem üblichen Aufbau einer Tastatur für einen Desktop-Computer. Des weiteren weisen derartige Tastaturen noch eine Schaltmatte mit Schaltnoppen, eine Schaltfolie und Tasten auf. Bei der Montage der Tastatur wird die Schaltfolie in das Tastaturunterteil gelegt. Darauf legt man die Schaltmatte mit den Schaltnoppen. Der Tastenträger wird je nach Ausführung ohne Befestigung auf die Schaltnoppen gelegt, oder am Tastaturoberteil festgeschraubt. Zum Abschluss der Montage werden die Tasten in den Tastenträger eingesetzt und die Tastatur wird mit dem Tastaturoberteil verschlossen.

Bei Notebooktastaturen wird der Tastenträger lose in das Tastaturunterteil eingelegt. Bei Computertastaturen würde die Verwindungssteifigkeit bei einem bloßen Einlegen des Tastaturträgers in die Tastatur zu sehr leiden.

Wird der Tastenträger mit Schrauben am Tastaturoberteil befestigt, erhöht sich der Montageaufwand enorm. Außerdem befinden sich mit den Schrauben Teile im Tastaturgehäuse die sich lösen können. In diesem Falle können sie Kurzschlüsse oder andere Fehler verursachen.

Es sind auch Tastaturen bekannt bei denen das Tastaturoberteil und der Tastenträger aus einem Spritzgussteil gebildet ist. In der Regel ist der Tastenträger aufwendig und teuer herzustellen. Da für unterschiedliche Designs unterschiedliche Tastaturoberteile benötigt werden, ist diese es wesentlich kostengünstiger nur das Tastaturoberteil und Unterteil neu herzustellen und den gleichen Tastenträger zu verwenden.

Aufgabe der Erfindung ist es, eine Tastatur mit separaten einem Tastenträger aufzuzeigen, welche eine sichere, einfache und schnelle Montage des Tastenträgers ermöglicht.

Die Aufgabe wird erfindungsgemäß dadurch gelöst, dass der Tastenträger formschlüssig und klemmend am Tastaturoberteil festlegbar ist.

Da der Tastenträger am Tastaturoberteil befestigt werden kann, wird die Verwindungssteifigkeit der gesamten Tastatur wesentlich erhöht. Die Befestigung erfolgt ohne lose Teile. Das spart Kosten bei der Herstellung und Zeit bei der Montage.

Eine weiterführende Ausbildung der Erfindung sieht vor, dass entweder Tastenträger oder Tastaturoberteil Haken aufweisen, die bei der Montage in entsprechende Aussparungen am Gegenstück eingreifen. Nach dem Verschieben eines der beiden Tastaturteile horizontal relativ zum anderen, befinden sich die Haken nicht mehr an den Aussparungen, sondern etwas daneben. Das Tastaturmaterial an dieser Stelle wird durch den Haken am anderen Tastaturteil festgehalten. Die beiden Tastaturteile sind aneinander festgelegt.

Weitere Ausgestaltungsmöglichkeiten und Einzelheiten sind in den Unteransprüchen angegeben.

Die Erfindung wird nachfolgend anhand eines Ausführungsbeispiels näher erläutert.

In den Zeichnungen zeigen
- Figur 1: einen Teil eines Tastenträger und eines Tastaturoberteils,
- Figur 2: einen Teil eines am Tastaturoberteil festgelegten Tastenträgers.

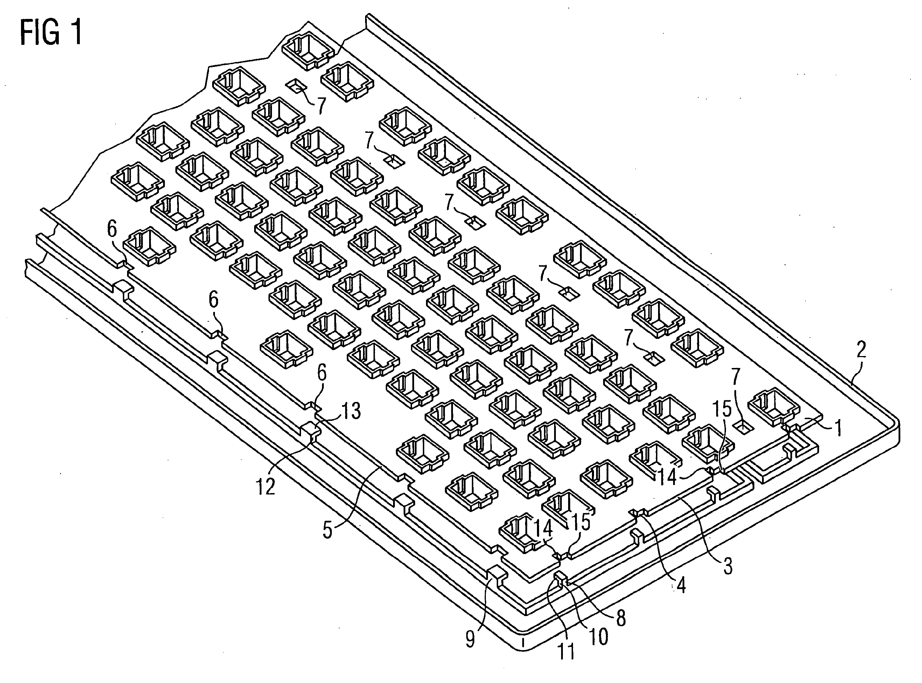

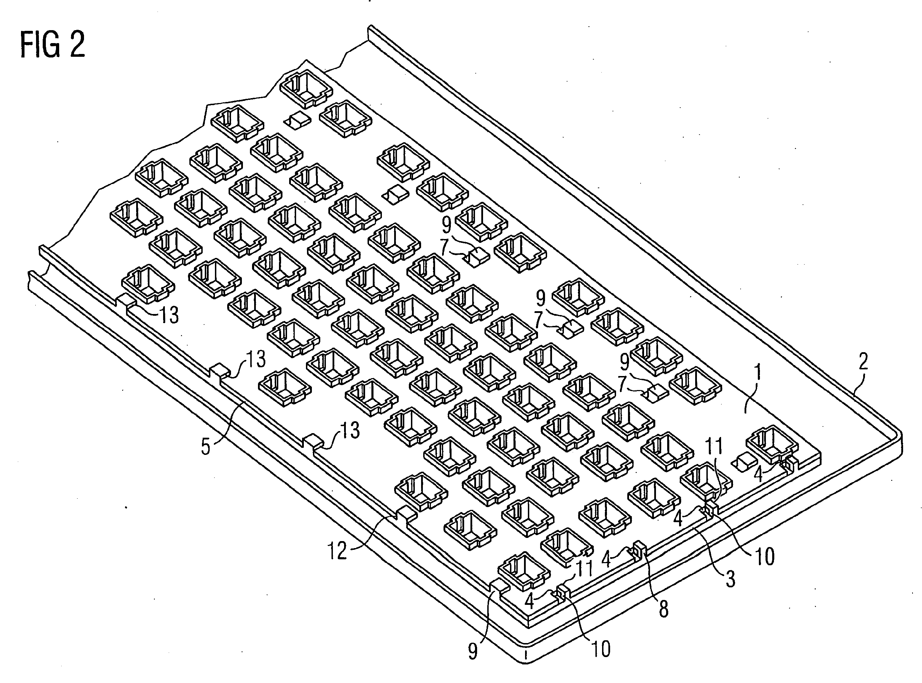

Figur 1 zeigt in Schrägansicht einen Teil der Unterseite eines rechteckigen Tastenträgers 1, über einem Tastaturoberteil 2 als Explosionszeichnung. Der Tastenträger 1 weist an seiner kurzen Seiten 3 mehrere treppenförmige Aussparungen 4 auf. An einer seiner langen Seiten 5 sind rechteckige Aussparungen 6 ausgebildet. An der gegenüberliegenden langen Seite des Tastenträgers 1 befinden sich, etwas vom Rand des Tastenträgers 1 beabstandet, rechteckige Öffnungen 7. Das Tastaturoberteil 2 weist auf Höhe der treppenförmigen Aussparungen 4 des Tastenträgers 1 schmale Haken 8 und auf Höhe der rechteckigen Aussparungen 6, sowie der rechteckigen Öffnungen 7 breite Haken 9 auf (siehe Figur 2).

Die schmalen Haken 8 sind aus zwei Abschnitten 10,11 gebildet. Die langen Abschnitt 10 stehen senkrecht auf von dem Tastaturoberteil 2 ab. Die Länge der langen Abschnitte 10 der schmalen Haken 8 entspricht exakt der Dicke der Platte des Tastenträgers 1. Die kurzen Abschnitte 11 steht senkrecht auf die langen Abschnitte 10.

Die breiten Haken 9 weisen ebenfalls zwei Abschnitte 12,13 auf, welche ebenfalls aufeinander senkrecht stehen und gleich lang sind wie die Abschnitte 10 und 11 ausgebildet sind.

Die treppenförmigen Aussparungen 4 bestehen aus zwei unterschiedlich tiefen Aussparungen 14,15. Dabei entspricht die Tiefe der großen Aussparung 14, der Länge der kurzen Abschnitte 11 der schmalen Haken 8. Die Breite der Aussparungen 14,15 ist minimal größer gewählt wie die Breite der schmalen Haken 7.

Die rechteckigen Aussparungen 6, sowie die rechteckigen Öffnungen 7 sind in ihrer Größe minimal größer gewählt wie die kurzen Abschnitte 13 der breiten Haken 9.

Zum Festlegen des Tastenträgers 1 am Tastaturoberteil 2 wird der Tastenträger 1 so auf das Tastaturoberteil 2 gesteckt, dass die schmalen Haken 8 in die großen Aussparungen 14 der treppenförmigen Aussparungen 4 und die breiten Haken 9 in die rechteckigen Aussparungen 6 und die rechteckigen Öffnungen 7 eingreifen. Anschließen wird der Tastenträger 1 horizontal und parallel verschoben, so dass das Plattenmaterial des Tastenträgers 1 von den Haken 8,9 zwischen den kurzen Abschnitten 11,13 und dem Tastaturoberteil 2 umgriffen und eingeklemmt und damit festgelegt wird.

Figur 2 zeigt einen Teil eines bereits am Tastaturoberteil 2 festgelegten Tastenträgers 1. Die breiten Haken 9 stehen aus den rechteckigen Aussparungen 6 und den rechteckigen Öffnungen 7 hervor und klemmen mit ihren kurzen Abschnitten 13 den Tastenträger 1 am Tastaturoberteil 2 fest. Die Haken 8,9 und Aussparungen 4,6 bzw. Öffnungen 7 sind so verteilt zwischen Tastaturoberteil und Tastenträger angeordnet, dass diese flächig miteinander verbunden sind und dadurch eine besserer Verwindungssteifigkeit erzielt wird.

Die Erfindung ist nicht auf das angegebene Ausführungsbeispiel beschränkt. Die Anordnung, Anzahl und Konstruktion der Haken 8,9 , Aussparungen 4,6 und Öffnungen 7 kann beliebig ausgebildet sein, solange die Ausbildung ein formschlüssiges Verklemmen durch Verschieben von Tastenträger 1 oder Tastaturoberteil 2 ermöglicht.

### Bezugszeichenliste

- 1: Tastenträger
- 2: Tastaturoberteil
- 3: Kurze Seite
- 4: Treppenförmige Aussparungen
- 5: Lange Seite
- 6: Rechteckige Aussparungen
- 7: Öffnungen
- 8: Schmale Haken
- 9: Breite Haken
- 10: Lange Abschnitte der schmalen Haken
- 11: Kurze Abschnitte der schmalen Haken
- 12: Lange Abschnitte der breiten Haken
- 13: Kurze Abschnitte der breiten Haken
- 14: Große Stufe
- 15: Kleine Stufe

## Patentansprüche

1. Tastatur mit einem Tastaturoberteil (2), einem Tastaturunterteil und einem Tastenträger (1),
**dadurch gekennzeichnet, dass**
der Tastenträger (1) formschlüssig und klemmend am Tastaturoberteil (2) festlegbar ist.

2. Tastatur nach Anspruch 1,
**dadurch gekennzeichnet, dass**
der Tastenträger (1) und das Tastaturoberteil (2) Vorrichtungen aufweisen, die zur klemmenden Befestigung zusammenwirken.

3. Tastatur nach Anspruch 2,
**dadurch gekennzeichnet, dass**
die Vorrichtungen zum Verklemmen einstückig mit dem jeweiligen Bauteil hergestellt sind.

4. Tastatur nach einem der Ansprüche 1 bis 3,
**dadurch gekennzeichnet, dass**
an einem der beiden Bauteile Tastenträger (1) oder Tastaturoberteil (2) Haken (8,9) ausgebildet sind und am anderen Bauteil Aussparungen (4,6) oder Öffnungen (7) ausgebildet sind.

5. Tastatur nach Anspruch 4,
**dadurch gekennzeichnet, dass**
das Bauteil mit den Aussparungen (4,6) auf das Bauteil mit den Haken (8,9) steckbar ist, wobei die Haken (8,9) in die Aussparungen (4,6) und die Öffnungen (7) eingreifen, und dass, durch horizontales Verschieben eines der beiden Bauteile relativ zum anderen Bauteil, das Bauteil mit den Aussparungen (4,6) klemmend durch die Haken (8,9) am anderen Bauteil festlegbar ist.

6. Tastatur nach einem der Ansprüche 4 oder 5,
**dadurch gekennzeichnet, dass**
der Tastenträger (1) unterschiedlich ausgestaltete Aussparungen (4,6) aufweist.

7. Tastatur nach einem der Ansprüche 4 bis 6,
**dadurch gekennzeichnet, dass**
durch die Form der Aussparungen (4,6) die Richtung des horizontalen Verschiebens zum Festlegen des Tastenträgers (1) festgelegt ist.

8. Tastatur nach einem der Ansprüche 4 bis 7,
**dadurch gekennzeichnet, dass**
die Haken (8,9) unterschiedlich lange Abschnitte (10,11,12,13) aufweisen, welche paarweise senkrecht aufeinander stehen.
